# EUROPÄISCHE PATENTSCHRIFT

(11) **EP 0 413 198 B1**
(45) Veröffentlichungstag und Bekanntmachung des Hinweises auf die Patenterteilung: **27.10.1993**
(21) Anmeldenummer: 90114778.5
(22) Anmeldetag: 01.08.1990
(51) Int. Cl.: G01K 1/14, G01K 13/02

(54) **Anordnung für die Messung der Temperatur einer eine Rohrleitung durchströmenden Flüssigkeit**
Arrangement for measuring the temperature of a liquid flowing through a conduit
Arrangement pour la mesure de la température d'un liquide passant à travers une conduite

(30) Priorität: 16.08.1989 DE 3927075
(43) Veröffentlichungstag der Anmeldung: 20.02.1991
(73) Patentinhaber: SIEMENS AKTIENGESELLSCHAFT, 80333 München (DE)
(72) Erfinder: Greppmaier, Paul, D-8500 Nürnberg 50 (DE)

(56) Entgegenhaltungen:
- EP-A- 0 008 041
- EP-A- 0 154 960
- DE-A- 1 773 549
- DE-A- 3 236 306

## Beschreibung

Die Erfindung betrifft eine Meßanordnung für die Ermittlung der Temperatur einer eine Rohrleitung durchströmenden Flüssigkeit.

Meßanordnungen der oben beschriebenen Art sind häufig zweiteilig ausgeführt in der Weise, daß der Temperaturfühler von einem fest eingebauten Mantelrohr umgeben ist, damit dieser, ohne die Rohrleitung entleeren zu müssen, ausgewechselt werden kann. Diese Unterbringung des Temperaturfühlers in einem Mantelrohr ist deshalb nachteilig, weil der Meßsensor des Temperaturfühlers nicht die Temperatur der strömenden Flüssigkeit mißt, sondern die Innentemperatur des Mantelrohres. Die dabei entstehenden Abweichungen sind zwar nicht beträchtlich, differieren aber insofern zeitabhängig, als sich die Außenwand des Mantelrohres im Laufe der Zeit mit Ablagerungen umgibt, die zu einer zunehmenden, zeitabhängigen Verfälschung der Messung führen. Man ist daher bestrebt, den Meßsensor des Temperaturfühlers möglichst unmittelbar mit der zu messenden Flüssigkeit in Kontakt zu bringen. Um dies, ohne den betreffenden Rohrleitungsabschnitt jedes Mal vorher druckfrei zu machen, zu ermöglichen, ist es aus der EP-A-0 154 960 bereits bekannt, ein Schieber-Absperrventil in die betreffende Rohrleitung einzusetzen, dessen Schieberelement auf einer Seite koaxial zu seiner Drehachse eine Bohrung aufweist, durch die der Meßfühler von außen in den Strömungskanal des Schieberelementes eingeführt werden kann.

Nachteilig bei dieser bekannten Vorrichtung ist einerseits, daß die in vielen Fällen vorhandene einfache Anordnung für die Halterung eines mit einem Mantelrohr versehenen Temperaturfühlers nicht mehr verwendet werden kann, sondern durch ein Schieber-Absperrventil ersetzt werden muß, was in jedem Fall mehr oder weniger umfangreiche Installationsarbeiten erfordert, und andererseits der Flüssigkeitsstrom zum Auswechseln des Temperaturfühlers durch Schließen des Schiebers unterbrochen werden muß.

Der Erfindung liegt die Aufgabe zugrunde, das Auswechseln des Meßfühlers auf ebenso einfache Weise und ohne Unterbrechung des Flüssigkeitsstromes wie bisher zu ermöglichen, dabei aber auf das Mantelrohr verzichten zu können.

Diese Aufgabe wird durch die im Patentanspruch 1 angegebene Erfindung gelöst. Dabei kann, nach Entfernen des Mantelrohres, die bisherige Installation verwendet werden. Es ist lediglich erforderlich, auf den vorhandenen Rohrstutzen anstelle des Mantelrohres einen Kugelhahn-Absperrschieber aufzuschrauben, der zunächst geschlossen ist. An der freien Seite dieses Absperrschiebers wird der Temperaturfühler dann bis zum Aufsitzen seiner Spitze auf den geschlossenen Kugelhahn durch eine Ringdichtung hindurchgeführt und der Kugelhahn geöffnet, wobei die Ringdichtung ein Austreten von Flüssigkeit verhindert. Anschließend wird der Temperaturfühler durch die dann freie Öffnung des Kugelhahns in seine Endposition geführt und mit Hilfe eines Befestigungselementes am freien Ende des Absperrschiebers befestigt. Zum Auswechseln des Temperaturfühlers wird dieser Vorgang in umgekehrter Reihenfolge durchgeführt. Auf diese Weise ist erreicht, daß der Meßfühler ohne Mantelrohr, also unmittelbar, mit der zu messenden Flüssigkeit in Kontakt gebracht werden kann, ohne daß die vorhandene Anordnung durch umfangreiche Installationsarbeiten ausgewechselt werden muß und ohne den Flüssigkeitsstrom zu unterbrechen.

Weitere Einzelheiten der Erfindung ergeben sich aus dem im folgenden beschriebenen, schnittbildlich dargestellten Aus führungsbeispiel.

Eine Rohrleitung 1, beispielsweise einer Heizungsanlage, ist mit einer Meßöffnung 2 versehen, die von einer in einem spitzen Winkel gegen die durch den Pfeil angedeutete Strömungsrichtung aufgeschweißten, in bekannter Weise mit einem Innenrohrgewinde versehenen Muffe 3 umgeben ist. In dieses Innengewinde ist ein Kugelhahn-Absperrschieber 5 mit seinem Außenrohrgewinde 6 eingeschraubt. Der Kugelhahn 7 ist in bekannter Weise über eine mit diesem gekuppelte Betätigungwelle 8 mit Außenvierkant, die mit Hilfe einer doppelten 0-Ringdichtung 9 gegen das Austreten von Flüssigkeit abgedichtet ist, im Absperrschiebergehäuse drehbar gelagert. In geöffneter Position des Kugelhahns 7 stellt dessen Durchtrittsöffnung 10 einen Verbindungskanal zwischen dem Inneren der Rohrleitung 1 und dem äußeren Anschluß des Kugelhahn-Absperrschiebers her, so daß durch diesen Verbindungskanal ein Temperaturfühler 11 solcher Länge hindurchgeführt werden kann, daß dieser mit seinem nicht dargestellten Meßsensor durch die Meßöffnung 2 der Rohrleitung 1 hindurch in diese hineinragt. Der eingeführte Temperaturfühler 11 ist durch eine zwischen dem rohrseitigen Ende des Kugelhahn-Absperrschiebers 5 und dessen Kugelhahn 7 angeordnete Kunststoffbuchse 12 und auf der anderen Seite des Kugelhahns 7 von einer zweiten doppelten O-Ring-Dichtung 13 zentriert, welch letztere einen Austritt von Flüssigkeit aus der Rohrleitung 1 bei geöffnetem Kugelhahn 7 und eingeführtem Temperaturfühler 11 verhindert. Zur Befestigung des Temperaturfühlers 11 in der der Rohrleitung 1 abgewandten Öffnung des Kugelhahn-Absperrschiebers 5 dient ein Befestigungselement in Form einer Halterungsbuchse 14, deren Außengewinde in ein entsprechendes Innengewinde des Kugelhahn-Absperrschiebers 5 eingeschraubt wird. Der Temperaturfühler 11 ist im Bereich der Halterungsbuchse 14 mit einer Ringnut 15 versehen, in die eine seitlich in die Haltungsbuchse 14 einschraubbare Plombierschraube 16 mit ihrer Spitze eintaucht. Dadurch ist verhindert, daß der Temperaturfühler 11 unberechtigterweise entfernt oder manipuliert werden kann.

Zum Auswechseln des Temperaturfühlers wird zunächst die Plombierschraube 16 gelöst, dann der Temperaturfühler 11 soweit herausgezogen, daß er den Kugelhahn 7 freigibt, aber sich noch im Bereich der doppelten 0-Ring-Dichtung 13 befindet, so daß keine Flüssigkeit aus der Rohrleitung 1 entweichen kann. Dann wird mit Hilfe der Betätigungswelle 8 der Kugelhahn 7 durch eine 90°-Drehung geschlossen. Anschließend kann der Temperaturfühler 11 vollständig herausgezogen werden. Das Einführen eines neuen Temperaturfühlers geschieht in umgekehrter Reihenfolge.

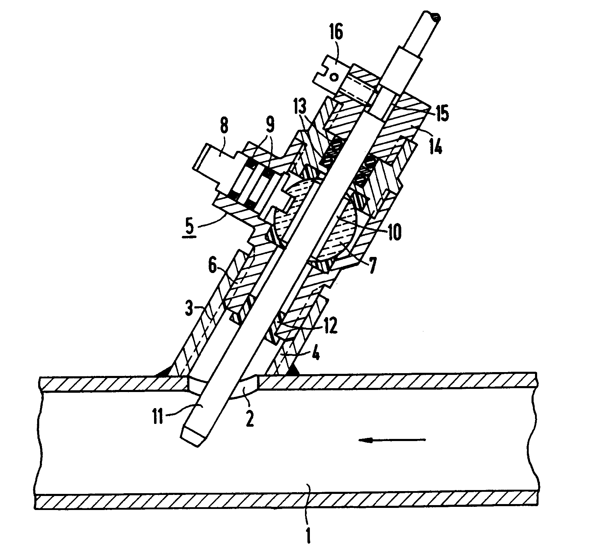

## Patentansprüche

1. Meßanordnung für die Ermittlung der Temperatur einer eine Rohrleitung (1) durchströmenden Flüssigkeit mit folgenden Merkmalen
a) zur Ermittlung der Temperatur ist ein Temperaturfühler (11) mit einer rohrförmigen Hülse zur Aufnahme eines in seiner Spitze angeordneten Meßsensors vorgesehen,
b) der Temperaturfühler (11) ist mit Hilfe eines Befestigungselementes (14) am offenen Ende eines die Meßöffnung (2) der Rohrleitung (1) umgebenden, an die äußere Rohrwand angeflanschten Rohrstutzens flüssigkeitsdicht lösbar derart befestigt, daß sein Meßsensor in das Rohrinnere hineinragt,
c) zwischen dem Befestigungselement (14) und dem offenen Ende des Rohrstutzens (3) ist ein Kugelhahn-Absperrschieber (5) angeordnet,
d) der Temperaturfühler (11) ist so bemessen, daß dieser nach seiner Befestigung am äußeren Ende des Kugelhahn-Absperrschiebers (5) bei geöffnetem Absperrschieber (5) durch die Durchtrittsöffnung von dessen geöffnetem Kugelhahn (7) hindurch mit seinem Meßsensor in die Rohrleitung (1) hineinragt und zwischen dem Befestigungselement (14) des Temperaturfühlers (11) und dem Kugelhahn (7) eine die Innenwand des Absperrschiebers (5) gegen die Außenwand des Temperaturfühlers (11) abdichtende Ringdichtung (13) angeordnet ist.

2. Meßanordnung nach Anspruch 1, **dadurch gekennzeichnet,** daß das Befestigungselement (14) eine Schraubbuchse ist, die eine radiale Gewindebohrung besitzt, in die eine, in eine Ringnut (15) des Temperaturfühlers (11) eingreifende Plombierschraube (16) einschraubbar ist.

## Claims

1. Measuring arrangement for determining the temperature of a liquid flowing through a pipeline (1), having the following features:
a) for determining the temperature, a temperature detector (11) is provided with a tubular sleeve for receiving a measuring sensor arranged in the tip of the temperature detector (11),
b) the temperature detector (11) is detachably secured in a liquid-tight manner with the aid of an attachment element (14) to the open end of a pipe socket which surrounds the measuring aperture (2) in the pipeline (1) and which is flange-mounted on the outer pipe wall, so that the measuring sensor of the temperature detector (11) projects into the pipe interior,
c) between the attachment element (14) and the open end of the pipe socket (3) there is arranged a ball valve-stop valve (5),
d) the temperature detector (11) is designed so that, after its attachment to the outer end of the ball valve-stop valve (5), when the stop valve (5) is open, this temperature detector (11) projects through the aperture by its measuring sensor from the open ball valve (7) of this stop valve (5) into the pipeline (1), and so that, between the attachment element (14) of the temperature detector (11) and the ball valve (7), there is arranged a ring seal (13) which seals the inner wall of the stop valve (5) against the outer wall of the temperature detector (11).

2. Measuring arrangement according to claim 1, characterised in that the attachment element (14) is a screwed bushing having a radial threaded hole into which there can be screwed a sealing screw (16) which engages in an annular groove (15) in the temperature detector (11).

## Revendications

1. Dispositif de mesure pour déterminer la température d'un liquide passant dans un conduit (1), ayant les caractéristiques suivantes :
a) pour déterminer la température, il est prévu une sonde de température (11) à manchon tubulaire de réception d'un détecteur de mesure monté à son extrémité,
b) la sonde de température (11) est fixée, de manière amovible et étanche au liquide, à l'aide d'un élément de fixation (14), à l'extrémité ouverte d'un embout tubulaire entourant l'ouverture de mesure (2) du conduit (1) et bridé à la paroi extérieure du conduit de manière que son détecteur de mesure pénètre à l'intérieur du tube,
c) une vanne d'arrêt (5) à robinet à boisseau sphérique est montée entre l'élément de fixation (14) et l'extrémité ouverte de l'embout tubulaire (3),
d) la sonde de température (11) est telle qu'après avoir été fixée à l'extrémité extérieure de la vanne d'arrêt à robinet (5) à boisseau sphérique, elle pénètre, lorsque la vanne d'arrêt (5) est ouverte, à travers l'ouverture de passage de son robinet à boisseau sphérique (5) ouvert, par son détecteur de mesure dans le conduit (1) et une garniture (11) annulaire d'étanchéité, rendant étanche la paroi intérieure de la vanne d'arrêt (5) par rapport à la paroi extérieure de la sonde de température (11), est montée entre l'élément de fixation (14) de la sonde de température (11) et le robinet à boisseau sphérique (7).

2. Dispositif de mesure suivant la revendication 1, caractérisé en ce que l'élément de fixation (14) est une douille taraudée qui possède un taraudage radial, dans lequel peut se visser une vis (16) plombée pénétrant dans une gorge (15) annulaire de la sonde de température (11).
